(19) Europäisches Patentamt
European Patent Office
Office européen des brevets

(11) **EP 3 576 048 A1**

(12) **EUROPEAN PATENT APPLICATION**

(43) Date of publication:
**04.12.2019 Bulletin 2019/49**

(51) Int Cl.:
***G06T 5/00*** (2006.01)

(21) Application number: **18174851.8**

(22) Date of filing: **29.05.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Koninklijke Philips N.V.**
**5656 AE Eindhoven (NL)**

(72) Inventors:
• **GOTMAN, Shlomo**
**5656 AE Eindhoven (NL)**
• **ROMMAN, Zimam**
**5656 AE Eindhoven (NL)**

(74) Representative: **de Haan, Poul Erik et al**
**Philips International B.V.**
**Philips Intellectual Property & Standards**
**High Tech Campus 5**
**5656 AE Eindhoven (NL)**

(54) **ADAPTIVE WINDOW GENERATION FOR MULTI-ENERGY X-RAY**

(57)     Dual-energy (or multi-energy) X-Ray acquisition systems are required at a first X-Ray energy, but may be transformed into other X-Ray energies selected by a user based upon the basis decomposition principle. In this way, a dual-energy X-Ray image acquired at first energy can be transformed into an energy more suited to displaying certain types of material or anatomical detail (for example, bone and soft tissue).

It is conventionally the case that the window settings (window center and window width) applied to the transformed X-Ray image are searched for by a user of the X-Ray acquisition system in a manual and subjective manner. The present application discusses a multi-energy X-Ray acquisition apparatus enabling an automatic adaptive window generation of multi-energy X-Ray image data.

Fig. 1

**Description**

FIELD OF THE INVENTION

This invention relates generally to an apparatus for automatic adaptive window generation of multi-energy X-Ray image data, and an associated method, X-Ray imaging system, computer program element, and computer readable medium.

BACKGROUND OF THE INVENTION

In the X-Ray imaging field, there is a general goal to improve the usefulness of X-Ray images whilst keeping X-Ray exposure of patients within acceptable limits. Dual-energy X-Ray imaging systems are capable of detecting photons that pass through patients at multiple (at least two) energy levels. Different materials (such as bone and soft tissue) attenuate X-Ray photons to a different extent, and therefore using a dual-energy CT detector enables inferences to be made about materials present at different points of a region of interest of a dual-energy X-Ray image.

The article "Qualitative Comparison of Noncontrast Head Dual-Energy Computed Tomography using Rapid Voltage Switching Technique and Conventional Computed Tomography" by William D. Hwang, MD, et. al (in the "Journal of Computer Assisted Tomography", J. Comput. Assist. Tomogr., pp. 320-325, Volume 40, no. 2, March/April 2016, published by Wolters Kluwer Health, Inc.) discusses image reconstruction of dual-energy computed tomography images along a spectrum of virtual monochromatic energy levels, and randomized trial of reconstructed virtual monochromatic energy images.

The provision of reconstructed virtual monochromatic energy images can, however, be further improved.

SUMMARY OF THE INVENTION

Accordingly, it would be advantageous to provide an improved technique for the reconstruction of virtual monochromatic energy images acquired in a dual-energy, or multi-energy X-Ray imaging process, in particular dual-energy or multi-energy CT.

According to a first aspect, there is provided an apparatus for automatic adaptive window generation for multi-energy X-Ray image data. The apparatus comprises:

- an input unit; and
- a processing unit.

The input unit is configured to acquire multi-energy X-Ray image data of an area of interest of an object at a first image energy level setting, and to acquire a second image energy level setting.

The processing unit is configured to define a representative subset of the area of interest of the first X-Ray image data, to calculate a first window metric of the X-Ray image data within the representative subset of the area of interest, to generate second X-Ray image data of the area of interest at the second image energy level setting based on the first X-Ray image data, to calculate a second window metric of the second X-Ray image data within the representative subset of the area of interest of the second X-Ray image data at the second image energy level setting; and to generate an updated window center and window width as a function of the first and second window metrics.

Dual-energy, or multi-energy X-Ray detectors typically have a dynamic range of around 4K levels. On the other hand, display means used with X-Ray scanners typically have a dynamic range capable of accommodating fewer than 4K levels (for example, 0-255 levels). This implies that the dynamic range of the original multi-energy X-Ray data is usually sub-sampled to make the display possible. Such subsampling is provided using an approach referred to as "windowing". A window function is typically applied using a look-up table, although other methods of generating the window function may be applied to the technique discussed in this application.

It is possible to reconstruct virtual monochromatic energy images from the original multi-energy X-Ray image data having knowledge of the basis functions of materials likely to be present in a CT image, such as bone, metal, or soft tissue, for example. A virtual monochromatic energy image is one that constructs a virtual X-Ray image at a given virtual energy, starting from input multi-energy X-Ray image data. In other words, the X-Ray acquisition device has not detected photons at the virtual energy, but such a virtual energy image has been extrapolated from the original multi-energy X-Ray input data having knowledge of the material characteristics present.

However, whilst changing the virtual energy (keV) setting, the quality or perceptibility of various anatomical structures in a display can become sub-optimal. According to aspects of the invention discussed herein, it is possible to generate bespoke windowing (brightness and contrast) configurations appropriate to a current virtual energy (keV) setting as the virtual display energy (keV) setting of the multi-energy X-Ray image is changed, and optionally to automatically set the windowing (brightness and contrast) configurations as the virtual display energy (keV) setting is adapted.

Optionally, the apparatus further comprises an output unit. The output unit is configured to display the updated window center and window width settings to a user via a graphical user interface.

Accordingly, as the virtual display energy (keV) of the multi-energy X-Ray image is changed, more appropriate windowing settings are calculated and displayed automatically to a user, for example on a sub-window of a Graphical User Interface (GUI) of an X-Ray scanner control console. This enables a user to update the windowing settings on a multi-energy X-Ray display with appropriately calculated settings, and avoids the need for a user to "tune" or "scan" the brightness and contrast settings manually, a frequently inconvenient and inaccurate process. Of course, in an embodiment in which the window width and center are adjusted automatically, this option provides informative feedback to a user about the state of the width and center adjustment calculated by the apparatus.

Optionally, the processing unit is further configured to adjust the second X-Ray image data at the second image energy level setting using the updated window center and window width setting.

Accordingly, an automatic adjustment of the windowing settings enables an appropriately windowed image for a particular keV setting to be displayed to a user automatically.

Optionally, the first window metric comprises an average pixel value of pixels within the first representative subset of the first X-Ray image data, and wherein the second window metric comprises an average pixel value of pixels within the second representative subset of the second X-Ray image data.

Accordingly, a first window metric may be provided calculated based on a portion of an input X-Ray image having clinical relevance.

Optionally, the first window metric comprises a standard deviation of pixel values within the first representative subset of the first X-Ray image data, and the second window metric comprises standard deviation of pixel values within the second representative subset of the second X-Ray image data.

Accordingly, a second window metric may be provided calculated based on a portion of an input X-Ray image having clinical relevance.

Optionally, the updated window center and window width are normalized to the Hounsfield Unit (HU) 12 bit scale.

Optionally, the processing unit is configured to generate the updated window center and window width when the first image energy level setting and the second image energy level setting are changed, and mask data defining a mask of the representative subset of the area of interest in the first and second X-Ray image data used to generate the updated window width setting remains the same.

Accordingly, a range of virtual X-Ray images may be generated from input multi-energy X-Ray data. The dynamic range of the virtual X-Ray images is adjusted in accordance with the virtual energy setting of the virtual X-Ray image that has been selected.

Optionally, the representative subset of the area of interest is defined as a box occupying the center of the field of view of the X-Ray image data, or the representative subset of the area of interest is defined based on a user or algorithmic selection of an anatomical feature in the X-Ray image data.

Accordingly, a user of the apparatus may define a region of particular interest in the X-Ray image data (for example a region of clinical interest around a bone fracture, or a region of interest in an image of an X-rayed item of luggage) and provide the adjusted window settings based upon statistical characteristics of the region of particular interest.

Optionally, the first X-Ray image data is obtained from a multi-energy CT scanner.

According to a second aspect, there is provided a method for automatic adaptive window generation for multi-energy X-Ray image data comprising:

a) acquiring multi-energy X-Ray image data of an area of interest of an object at a first image energy level setting;
b) defining a representative subset of the area of interest of the first X-Ray image data;
c) calculating a first window metric of the X-Ray image data within the representative subset of the area of interest;
d) acquiring a second image energy level setting;
e) generating second X-Ray image data of the area of interest at the second image energy level setting based on the first X-Ray image data;
f) calculating a second window metric of the second X-Ray image data within the representative subset of the area of interest of the second X-Ray image data at the second image energy level setting; and
g) generating an updated window center and window width as a function of the first and second window metrics.

Optionally, the method according to the second aspect further comprises:

h) displaying the updated window center and window width settings to a user via a graphical user interface.

Optionally, the method according to the second aspect further comprises:

i) adjusting the second X-Ray image data at the second image energy level setting using the updated window center and window width setting.

According to a third aspect, there is provided an X-Ray imaging system, comprising:

- a multi-energy X-Ray scanning apparatus; and
- an apparatus for automatic adaptive window generation for multi-energy X-Ray image data.

The multi-energy X-Ray scanning apparatus is configured to transmit multi-energy X-Ray image data to the apparatus.

According to a fourth aspect, there is provided a computer program element for controlling a processing unit and/or system as provided in the first and/or third aspects, which, when the computer program element is executed by the processor and/or system, is adapted to perform the method of the second aspect.

According to a fifth aspect, there is provided a computer readable medium having stored the computer program element of the fourth aspect.

In the following application, the term "automatic adaptive window generation" refers to the calculation of windowing parameters that can be applied to an input multi-energy (dual-energy) X-Ray input image data (including a virtual X-Ray image) to reduce the dynamic range of the X-Ray input image data to preserve detail that is relevant to a system user. In the technical field, windowing is also referred to as "grey-level mapping", "contrast stretching", "contrast enhancement", or "histogram modification". Generating an X-Ray output image based upon an adaptively generated window will change the appearance of the output image to highlight clinically relevant structures. When generating an adaptive window, the "window center" defines the brightness of the X-Ray image, and the "window width" defines the contrast of the X-Ray image.

In the following application, applications are detailed with respect to a medical use-case. However, multi-energy X-Ray scanner have wide applicability, and the aspects of this application may also be applied to a luggage X-Ray scanner (airport security scanner), or any other X-Ray imaging application that applies dual- or multi-energy X-Ray imaging.

In the following application, the term "window width" is applied to multi (dual) energy CT imaging defines the range of numerical values that can possibly be output by each CT detector pixel in response to a stronger or weaker X-Ray signal. Thus, a transition from a very dark area to a very light area of an X-Ray image results in a wide window width of several thousands of Hounsfield Units HU being spanned, for example. A "wide window" is typically defined in a range from about 500 HU to 2500 HU. A "narrow window" is typically defined in a range from about 0 HU to 500 HU.

In the following application, the term "window center" (also referred to as "window width") refers to the midpoint of the range of the input data. A decreased window level leads to a brighter image.

In the following application, the term "first image energy level setting" refers to a virtual X-Ray image energy setting (typically in keV), and the term "second image energy level setting" refers to a different, higher or lower virtual X-Ray image energy setting using virtual X-Ray image reconstruction. Moving from a first image energy level setting to a second image energy level setting implies that the window settings should be automatically recalculated.

The technique of this application is suitable at least to 2D, 3D, or 4D (time-lapse) X-Ray imaging. Therefore, references to "pixels" and "voxels" of an X-Ray image are interchangeable without a loss of generality. Likewise, the term "multi-energy" X-Ray imaging embraces an X-Ray imaging system with a detector capable of discriminating between two photon energies (Dual-energy X-Ray detection, by indirect detection or direct photon detection), although X-Ray detectors capable of detecting more than two energies are not excluded from the present application because basis decomposition techniques would still be applicable.

In other words, it is proposed to automatically adjust windowing settings based on the requested energy value and image anatomy captured in a defined representative subset of the input multi-energy ex-Ray image data. This allows a better viewing reading workflow, since the image display visualization may be optimized while changing to a desired virtual keV value. Thus, an enforced manual calculation or discovery of the window settings when exploring virtual keV may be avoided, and a window value which is suitable for a specific imaged feature is provided.

BRIEF DESCRIPTION OF THE DRAWINGS

Exemplary embodiments will be described with reference to the following drawings:

Fig. 1 illustrates examples of multi-energy CT data captured with unchanged window settings (Figs. 1(a) to 1(c)) and with adaptively changed window settings (Figs. 1(d) to 1(f)).

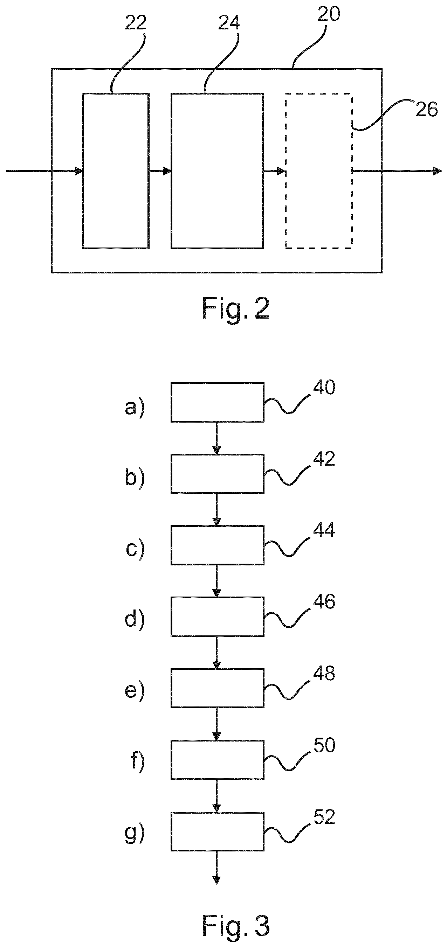

Fig. 2 schematically illustrates an apparatus according to the first aspect.
Fig. 3 schematically illustrates a method according to the second aspect.

Fig. 4 schematically illustrates a system according to the third aspect.

Fig. 5 schematically illustrates two approaches for selecting a representative subset of the area of interest (Fig. 5(a) by means of a bounding box and Fig. 5(b) by means of segmenting around an anatomical feature of interest).

## DETAILED DESCRIPTION OF EMBODIMENTS

Multi-energy CT imagers (such as dual-energy CT scanners) provide enhanced diagnostic capabilities beyond standard CT scanners. In particular, images generated by multi-energy CT scanner may be virtually energy-independent (a mono-energetic or monochromatic) image. By generating reconstructed images using the multi-energy CT data at different virtual keV settings, a user can produce images that are less prone to beam hardening artefacts, that are less affected by metal artefacts, that have improved low contrast resolution and visualization (for example, better differentiation between grey and white matter of the brain) and improved visualization of iodine introduced as a contrast medium.

Multi-energy X-Ray scanners can typically acquire images with a dynamic range of up to 4K levels. However, various imaging display modalities may not be up to resolve such a dynamic range. Accordingly, a window function is applied to the acquired multi-energy X-Ray data (typically applied as a look-up table, although other techniques are known). The window function enables the user to enhance the display of materials of interest (such as soft tissue and iodine, or soft tissue and bone) at the expense of other materials and structures.

However, is currently the case that if a user changes the virtual keV setting of an output multi-energy X-Ray image to achieve a better visualization of different anatomical areas dependent on the clinical question, the windowing settings (the window center and window width) remain unchanged, and so the overall image display quality becomes suboptimal as the virtual keV setting is changed.

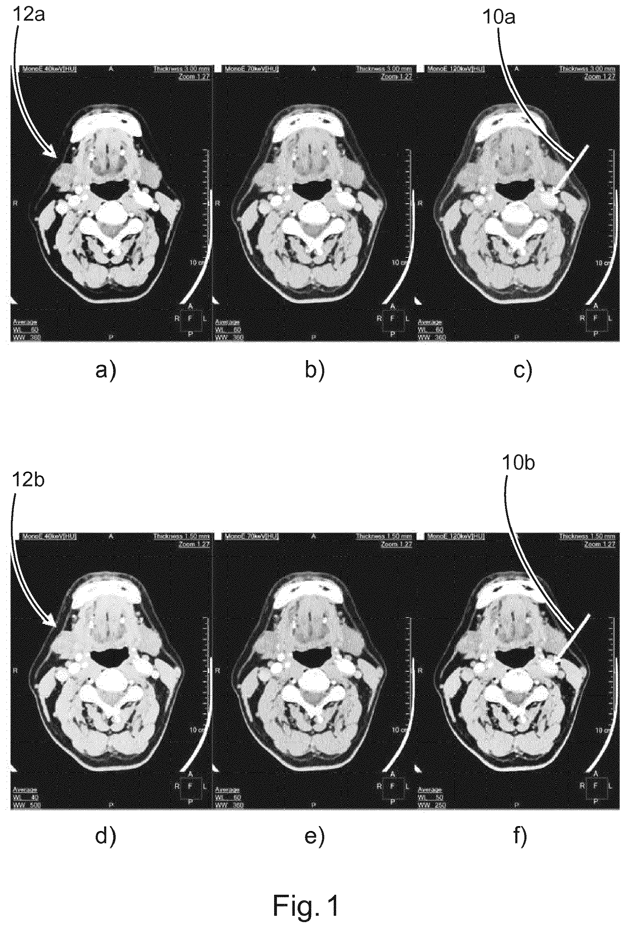

Fig. 1a) illustrates a low-energy mono energetic image at 40 keV.

Fig. 1b) illustrates a medium energy mono energetic image at 70 keV.

Fig. 1c) illustrates a high energy mono energetic image at 120 keV.

Figs. 1a) to 1c) are displayed with unchanged window settings. In this case, the window center is set at 60 HU, and the window width is set at 360 HU. In these images, low and high energy (virtual energy) images show suboptimal display characteristics. Arrow 10a reveals reduced vessel contrast at high energy, and arrow tip 12a illustrates poor subcutaneous fat contrast at low energy (virtual energy).

Figs. 1d) to 1f) illustrate images having the same energy values as in Figs. 1a) to 1c). Fig. 1d) is displayed with a window center of 40 HU and a window width of 500 HU. Fig. 1e) is displayed with a window center of 60 HU and a width of 360 HU. Fig. 1e) is displayed with a window center of 50 HU and they width of 250 HU.

Arrow 10b illustrates that the vessel contrast in Fig. 1f) is now displayed with enhanced contrast, and arrowhead 12b illustrates that the subcutaneous fat has a better display. Accordingly, the bespoke adjustment of window settings at different energy levels leads to improved overall viewing capabilities and experience. However, the variation of window settings of Figs. 1d) to 1f) has, until now, been achieved by a subjective manual process. A user of a multi-energy X-Ray scanner manually adjusts the window center and window width settings whilst subjectively observing the effect of such adjustments on the displayed X-Ray image. The window width and center settings are adjusted until, in the subjective opinion of a particular medical operator, a good display of the desired clinical feature is reached. This manual adjustment process is time-consuming and error-prone.

Aaccording to a first aspect, there is provided an apparatus 20 for automatic adaptive window generation for multi-energy X-Ray image data. The apparatus comprises:

- an input unit 22; and
- a processing unit 24.

The input unit 22 is configured to acquire multi-energy X-Ray image data of an area of interest of an object at a first image energy level setting, and to acquire a second image energy level setting.

The processing unit 24 is configured to define a representative subset of the area of interest of the first X-Ray image data, to calculate a first window metric of the X-Ray image data within the representative subset of the area of interest, to generate second X-Ray image data of the area of interest at the second image energy level setting based on the first X-Ray image data, to calculate a second window metric of the second X-Ray image data within the representative subset of the area of interest of the second X-Ray image data at the second image energy level setting; and to generate an updated window center and window width as a function of the first and second window metrics.

The apparatus 20, input unit 22, and processing unit 24 is typically implemented as part of a computer processing system such as a personal computer (PC). Thus, the input unit 22 may comprise a USB (TM), LAN, FireWire (TM) or other form of wired or wireless data modem or interface. Of course, the input unit 22 may comprise a specialized "DICOM" communication unit for cooperating with a "PACS" picture archiving system, enabling application of the technique discussed herein to archived multi-energy CT data. Optionally, the apparatus 20 may be connected to a multi-energy CT scanner, enabling acquisition and image processing of the acquired multi-energy X-Ray data from the CT scanner as it is acquired. Optionally, the apparatus 20 may be an embedded computer of the multi-energy CT scanner. Of course, the input unit 22 and processing unit 24 may be partially or fully implemented using many different forms of data processor capable of performing image processing, for example a general-purpose computer processor, a Graphics Processing Unit (GPU), a specialized Field Programmable Gate Array (FPGA) and/or a suitably programmed Digital Signal Processor (DSP).

Accordingly, the input unit 22 functions to receive multi-energy (dual-energy) X-Ray image data from a data retrieval system and/or from a multi-energy (dual-energy) CT scanner. The multi-energy X-Ray image data is acquired of an area of interest of an object dependent upon the orientation of the X-Ray source and detector of a CT scanner, for example. However, the present application is not restricted to a multi-energy CT scanner, and the present technique is also applicable, for example, to other types of multi-energy X-Ray scanner such as a "C-arm" acquisition system, a multi-energy breast X-Ray scanner, and also to security scanners such as airport baggage screening X-Ray scanners.

The first image energy level setting may be, for example, the acquisition energy of the original multi-energy CT acquisition, although this is not essential.

In addition, the input unit 22 is configured to acquire a second image energy level setting which is the "virtual" X-Ray image energy level that a user of the apparatus desires transform the multi-energy X-Ray image data into. The input unit 22 can acquire the second image energy level setting from a software interface of multi-energy X-Ray visualization software, or even from a manual input from the user on a input dialog box in a graphical user interface of multi-energy X-Ray visualization software, for example.

The processing unit 24 defines a representative subset of the area of interest of the first X-Ray image data. As will be explained below, the representative subset is a mask of the area of interest (the entire region of acquired multi-energy X-Ray data) containing features of clinical interest. One optional implementation provides a square or rectangular box occupying up to one quarter, one third, one half, or three quarters of the area of interest in the center of the area of interest - under the assumption that the multi-energy X-Ray data will have been acquired with the multi-energy X-Ray scanner centered upon a feature of clinical interest.

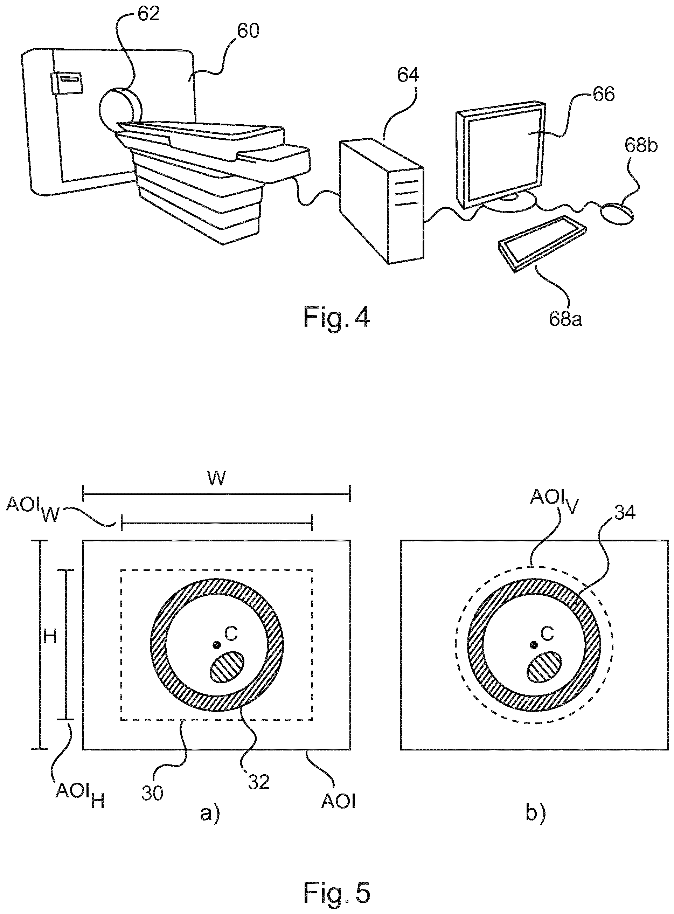

Fig. 5a) illustrates an area of interest AOI having a height $AOI_H$ and a width AOIw. A representative subset of the area of interest has been provided as a "bounding box" 30 around the center of the area of interest C, enclosing anatomical feature 32. The bounding box may be defined by a user, optionally from a list of presets. Optionally, the bounding box may be set to fixed coordinates, for example to enclose the center half of the area of the field of view.

Optionally, the processing unit 24 may apply a segmentation algorithm, or an anatomical atlas, to identify in the area of interest.

Fig. 5b) illustrates an area of interest $AOI_v$ that has been segmented around an anatomical feature of interest 34.

Of course, the processing unit 22 may define a representative subset of the area of interest with, or aided by, user-input via means of a Graphical User Interface. For example, a user may "click" a mouse cursor on an anatomical region representing a bony area. Optionally, a user may "draw" a mouse cursor around any region of the area of interest in a range of simple complex shapes.

The pixels comprised in the representative subset of the area of interest are used to calculate a first window metric of the X-Ray image data within the representative subset. In other words, the selected representative subset of the area of interest can be used to achieve consistent window settings based on materially in the area of interest of a field of view.

Optionally, the representative subset may be omitted, and the calculation may be performed on the entire area of interest.

The automatic window settings are calculated based on the image noise and average pixel value within the representative subset of the area of interest. In this application, the term "window center" corresponds to the average pixel value in the representative subset, and the term "window width" corresponds to the noise value in the representative subset.

When an updated keV value is selected by a user, and/or by automated GUI display software, the acquired multi-energy X-Ray image data is windowed with updated settings as follows:

$$\text{New Window Center} \quad = \quad (\text{NewAverage} * \text{OldWindowCenter}) / \text{OldAverage} \quad (1)$$

$$\text{New Window Width} \quad = \quad (\text{NewStandard Deviation} * \text{OldWindowWidth}) / \quad (2)$$
$$\text{OldStandardDeviation})$$

Thus, the new window center is calculated as the product of the new average pixel value in the region of interest multiplied by the old window center value, all divided by the average pixel value in the region of interest in the old image (where the region of interest between the old and new calculation does not change, and wherein the field of view does not change).

Likewise, the new window width is calculated as the product of the new standard deviation of pixels in the region of interest multiplied oy the old window width value, all divided by the old standard deviation of the pixels in the region of interest in the old image (where the region of interest between the old and new calculation does not change, and wherein the field of view does not change).

In more detail, the automatic adaptive window generation is provided based on the second image noise and second image average within the representative subset of the second image obtained at a second energy level (keV), compared to the first image noise and the first image average within the representative subset of the first image obtained at a first energy level wherein the first and second energy levels are different.

The window center corresponds to the average voxel (pixel) value within the representative subset of the area of interest. The window width corresponds to the standard deviation value within the representative subset of the area of interest.

Accordingly, when an updated (second) energy value is selected, the updated windowing values are calculated according to equations (1) and (2).

Optionally, the new windowing values are limited to within the standard 12 bit HU scale, in which the window center ranges from -1024 to 3095, and the window width ranges from 0 to 4095.

The average and the standard deviation are calculated, over the N voxels (pixels) over the representative subset as follows ("MASK" corresponds to the pixel region defined by the representative subset. The mask covers the same pixel regions in the first energy image and the second energy image):

$$AVG = const + \frac{1}{N} \sum_{i \in MASK} (PixelValue_i) \qquad (3)$$

$$SD = \sqrt{\left(\frac{1}{N} \sum_{i \in MASK} PixelValue_i{}^2\right) + 2Const \times AVG^2} \qquad (4)$$

N.b.: "const" is a normalizing parameter used to align the calculation to be within a HU-based scale.

In other words, a multi-energy image is received at a first energy level, a representative subset of the multi-energy image is selected, a second energy level (into which the multi-energy image is to be transformed) is received, and the updated window values are automatically and adaptively generated.

The automatic window is applied only when the keV value changes for an image displaying the same objects (for example, anatomy, or luggage configurations).

Optionally, when the user manually changes the window center or the window width (gradually or by using presets) the manually applied user changes override the calculation according to the current keV value.

Optionally, the apparatus 20 further comprises an output unit 24. The output unit is configured to display the updated window center and window width settings to a user via a graphical user interface.

Optionally, the output unit may be a computer monitor, or an embedded screen on a medical or luggage scanner. Optionally, the output unit may comprise hardware digital display LEDs located next to physical "window center" and "window width" sliders or knobs on a X-Ray scanner, to give fast feedback about the calculated optimal windowing settings to a user.

Optionally, the processing unit 22 is further configured to adjust the second X-Ray image data at the second image energy level setting using the updated window center and window width setting. In other words, once calculated, the updated window settings are instantly applied to the second X-Ray image data and the second image and level setting.

Optionally, the first window metric comprises an average pixel value of pixels within the first representative subset of the first X-Ray image data, and wherein the second window metric comprises an average pixel value of pixels within the second representative subset of the second X-Ray image data.

Optionally, the first window metric comprises a standard deviation of pixel values within the first representative subset of the first X-Ray image data, and wherein the second window metric comprises standard deviation of pixel values within the second representative subset of the second X-Ray image data.

Optionally, the updated window center and window width are normalized to the Hounsfield Unit (HU) 12 bit scale.

Optionally, the processing unit 22 is configured to generate the updated window center and window width when the first image energy level setting and the second image energy level setting are changed, and mask data defining a mask of the representative subset of the area of interest in the first and second X-Ray image data used to generate the updated window width setting remains the same.

Optionally, the representative subset of the area of interest is defined as a box occupying the center of the field of view of the X-Ray image data, or wherein the representative subset of the area of interest is defined based on a user or algorithmic selection of an anatomical feature in the X-Ray image data.

Optionally, the first X-Ray image data is obtained from a multi-energy CT scanner.

According to a second aspect, there is provided a method for automatic adaptive window generation of multi-energy X-Ray image data comprising:

> a) acquiring 42 multi-energy X-Ray image data of an area of interest of an object at a first image energy level setting;
> b) defining 44 a representative subset of the area of interest of the first X-Ray image data;
> c) calculating 46 a first window metric of the X-Ray image data within the representative subset of the area of interest;
> d) acquiring 48 a second image energy level setting;
> e) generating 50 second X-Ray image data of the area of interest at the second image energy level setting based on the first X-Ray image data;
> f) calculating 52 a second window metric of the second X-Ray image data within the representative subset of the area of interest of the second X-Ray image data at the second image energy level setting; and
> g) generating 56 an updated window center and window width as a function of the first and second window metrics.

According to a third aspect there is provided an X-Ray imaging system 60, comprising:

> - a multi-energy X-Ray scanning apparatus 62; and
> - an apparatus 64 for automatic adaptive window generation for multi-energy X-Ray image data;

wherein the multi-energy X-Ray scanning apparatus 62 is configured to transmit multi-energy X-Ray image data to the apparatus 64.

For example, the X-Ray imaging system 60 may comprise as the multi-energy X-Ray scanning apparatus 62 a multi-energy (or dual-energy) CT scanner, a multi-energy C-arm imaging system, a multi-energy breast X-Ray scanning system, or a multi-energy X-Ray luggage scanner. The multi-energy X-Ray scanning apparatus 62 is optionally configured to communicate with the apparatus 64 for adaptive window generation using wired and/or wireless data communication protocols, and/or by reading physical data storage media such as portable hard drives, tape drives, USB sticks, and the like.

The apparatus 64 is optionally provided with a output display 66 and/or input means such as a keyboard 68a and a mouse 68b, to enable the user to manually change the keV setting via an appropriate graphical user interface (GUI).

It will be appreciated that the multi-energy X-Ray scanning apparatus 62 may optionally be indirectly corrected to the apparatus 64 via, for example, a PACS system or another type of secure data storage server. Alternatively and in combination, the multi-energy X-Ray scanning apparatus 62 may provide multi-energy X-Ray imaging data directly to an analysis computer as a multi-energy X-Ray image of a patient is obtained.

According to a fourth aspect there is provided a computer program element for controlling a processing unit and/or system according to the first and/or third aspects, which, when the computer program element is executed by the processor and/or system, is adapted to perform the method of the second aspect.

According to a fifth aspect there is provided a computer readable medium having stored the computer program element of the fourth aspect.

A computer program element might therefore be stored on a computer unit, which might also be an embodiment of the present invention. This computing unit may be adapted to perform or induce performance of the steps of the method described above.

Moreover, it may be adapted to operate the components of the above-described apparatus.

The computing unit can be adapted to operate automatically and/or execute orders of a user. A computer program may be loaded into the working memory of a data processor. The data processor may thus be equipped to carry out the method of the invention.

This exemplary embodiment of the invention covers both the computer program that has the invention installed from the beginning, and a computer program that by means of an update turns an existing program into a program that uses the invention. A computer program may be stored and/or distributed on a suitable medium, such as an optical storage medium, or a solid state medium supplied together with, or as part of other hardware, but may also be distributed in other forms, such as via the Internet or other wired or wireless telecommunication systems.

However, the computer program may also be presented over a network like the World Wide Web, and can be downloaded into the working memory of a data processor from such a network. According to a further exemplary embodiment of the present invention, a medium for making a computer program element available for downloading is provided, which computer program element is arranged to perform a method according to one of the previously described embodiments of the invention.

It should to be noted that embodiments of the invention are described with reference to different subject-matters. In particular, some embodiments are described with reference to method-type claims, whereas other embodiments are described with reference to device-type claims. However, a person skilled in the art will gather from the above, and the following description that, unless otherwise notified, in addition to any combination of features belonging to one type of subject-matter, other combination between features relating to different subject-matters is considered to be disclosed with this application.

All features can be combined to provide a synergetic effect that is more than the simple summation of the features.

While the invention has been illustrated and described in detail in the drawings and foregoing description, such illustration and description are to be considered illustrative or exemplary, and not restrictive. The invention is not limited to the disclosed embodiments.

Other variations to the disclosed embodiments can be understood, and effected by those skilled in the art in practicing the claimed invention, from a study of the drawings, the disclosure, and the dependent claims.

In the claims, the word "comprising" does not exclude other elements or steps, and the indefinite article "a" or "an" does not exclude a plurality. A single processor, or other unit, may fulfil the functions of several items recited in the claims. The mere fact that certain measures are recited in mutually different dependent claims does not indicate that a combination of these measures cannot be used to advantage. Any reference signs in the claims should not be construed as limiting the scope.

**Claims**

1. An apparatus (20) for automatic adaptive window generation for multi-energy X-Ray image data comprising:

   - an input unit (22); and
   - a processing unit (24);

   wherein the input unit (22) is configured to acquire multi-energy X-Ray image data of an area of interest of an object at a first image energy level setting, and to acquire a second image energy level setting; and
   wherein the processing unit (24) is configured to define a representative subset of the area of interest of the first X-Ray image data, to calculate a first window metric of the X-Ray image data within the representative subset of the area of interest, to generate second X-Ray image data of the area of interest at the second image energy level setting based on the first X-Ray image data, to calculate a second window metric of the second X-Ray image data within the representative subset of the area of interest of the second X-Ray image data at the second image energy level setting; and to generate an updated window center and window width as a function of the first and second window metrics.

2. The apparatus (20) according to claim 1, further comprising:

   - an output unit (26);

   wherein the output unit (26) is configured to display the updated window center and window width settings to a user via a graphical user interface.

3. The apparatus (20) according to claim 1 or 2,
   wherein the processing unit (22) is further configured to adjust the second X-Ray image data at the second image energy level setting using the updated window center and window width setting.

4. The apparatus (20) according to one of the previous claims,
   wherein the first window metric comprises an average pixel value of pixels within the first representative subset of the first X-Ray image data, and wherein the second window metric comprises an average pixel value of pixels within the second representative subset of the second X-Ray image data.

5. The apparatus (20) according to one of the previous claims,
   wherein the first window metric comprises a standard deviation of pixel values within the first representative subset of the first X-Ray image data, and wherein the second window metric comprises standard deviation of pixel values within the second representative subset of the second X-Ray image data.

6. The apparatus (20) according to one of the previous claims,
   wherein the updated window center and window width are normalized to the Hounsfield Unit (HU) 12 bit scale.

7. The apparatus (20) according to one of the previous claims,
   wherein the processing unit (22) is configured to generate the updated window center and window width when the first image energy level setting and the second image energy level setting are changed, and mask data defining a mask of the representative subset of the area of interest in the first and second X-Ray image data used to generate the updated window width setting remains the same.

8. The apparatus (20) according to one of the previous claims,
   wherein the representative subset of the area of interest is defined as a box occupying the center of the field of view of the X-Ray image data, or wherein the representative subset of the area of interest is defined based on a user or algorithmic selection of an anatomical feature in the X-Ray image data.

9. The apparatus (20) according to one of the preceding claims,
   wherein the first X-Ray image data is obtained from a multi-energy CT scanner.

10. A method for automatic adaptive window generation of multi-energy X-Ray image data comprising:

    a) acquiring (40) multi-energy X-Ray image data of an area of interest of an object at a first image energy level setting;
    b) defining (42) a representative subset of the area of interest of the first X-Ray image data;
    c) calculating (44) a first window metric of the X-Ray image data within the representative subset of the area of interest;
    d) acquiring (46) a second image energy level setting;
    e) generating (48) second X-Ray image data of the area of interest at the second image energy level setting based on the first X-Ray image data;
    f) calculating (50) a second window metric of the second X-Ray image data within the representative subset of the area of interest of the second X-Ray image data at the second image energy level setting; and
    g) generating (52) an updated window center and window width as a function of the first and second window metrics.

11. The method according to claim 10, further comprising:

    h) displaying the updated window center and window width settings to a user via a graphical user interface.

12. The method according to one of the claims 10-11, further comprising:

    i) adjusting the second X-Ray image data at the second image energy level setting using the updated window center and window width setting.

13. An X-Ray imaging system (60), comprising:

    - a multi-energy X-Ray scanning apparatus (62); and
    - an apparatus (64) for automatic adaptive window generation for multi-energy X-Ray image data, in particular according to one of the claims 1-9;

    wherein the multi-energy X-Ray scanning apparatus (62) is configured to transmit multi-energy X-Ray image data to the apparatus (64).

14. A computer program element for controlling a processing unit and/or system as claimed in one of claims 1 to 9 and/or 13, which, when the computer program element is executed by the processor and/or system, is adapted to perform the method of one of claims 10 to 12.

15. A computer readable medium having stored the computer program element of claim 14.

Fig. 1

Fig. 2

Fig. 3

Fig. 4

Fig. 5

Europäisches
Patentamt

European
Patent Office

Office européen
des brevets

# EUROPEAN SEARCH REPORT

**Application Number**

EP 18 17 4851

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | EP 3 138 497 A1 (CANON KK [JP])<br>8 March 2017 (2017-03-08)<br>* abstract; figure 2 *<br>* paragraphs [0010], [0018], [0041] - [0053] * | 1-4,6,7,<br>9-15<br>5,8 | INV.<br>G06T5/00 |
| Y | US 2015/287188 A1 (GAZIT TIFERET T [IL] ET AL) 8 October 2015 (2015-10-08)<br>* abstract *<br>* paragraph [0062] * | 5,8 | |
| Y | WO 2017/013514 A1 (KONINKLIJKE PHILIPS NV [NL]) 26 January 2017 (2017-01-26)<br>* abstract *<br>* page 6, line 29 * | 5 | |
| A | WO 2010/113047 A1 (KONINKL PHILIPS ELECTRONICS NV [NL]; PHILIPS INTELLECTUAL PROPERTY [DE] 7 October 2010 (2010-10-07)<br>* abstract * | 1-15 | |
| A | US 2004/170308 A1 (BELYKH IGOR [US] ET AL) 2 September 2004 (2004-09-02)<br>* abstract * | 1-15 | TECHNICAL FIELDS SEARCHED (IPC)<br><br>G06T<br>A61B |

The present search report has been drawn up for all claims

| Place of search | Date of completion of the search | Examiner |
|---|---|---|
| Munich | 10 October 2018 | Rimassa, Simone |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**ANNEX TO THE EUROPEAN SEARCH REPORT
ON EUROPEAN PATENT APPLICATION NO.**

EP 18 17 4851

This annex lists the patent family members relating to the patent documents cited in the above-mentioned European search report.
The members are as contained in the European Patent Office EDP file on
The European Patent Office is in no way liable for these particulars which are merely given for the purpose of information.

10-10-2018

| Patent document cited in search report | | | Publication date | Patent family member(s) | | | Publication date |
|---|---|---|---|---|---|---|---|
| EP | 3138497 | A1 | 08-03-2017 | EP | 3138497 | A1 | 08-03-2017 |
| | | | | US | 2017069085 | A1 | 09-03-2017 |
| US | 2015287188 | A1 | 08-10-2015 | NONE | | | |
| WO | 2017013514 | A1 | 26-01-2017 | CN | 107847209 | A | 27-03-2018 |
| | | | | EP | 3324846 | A1 | 30-05-2018 |
| | | | | JP | 2018524110 | A | 30-08-2018 |
| | | | | WO | 2017013514 | A1 | 26-01-2017 |
| WO | 2010113047 | A1 | 07-10-2010 | CN | 102369555 | A | 07-03-2012 |
| | | | | EP | 2415016 | A1 | 08-02-2012 |
| | | | | JP | 5654561 | B2 | 14-01-2015 |
| | | | | JP | 2012522303 | A | 20-09-2012 |
| | | | | US | 2012032953 | A1 | 09-02-2012 |
| | | | | WO | 2010113047 | A1 | 07-10-2010 |
| US | 2004170308 | A1 | 02-09-2004 | NONE | | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

• Qualitative Comparison of Noncontrast Head Dual-Energy Computed Tomography using Rapid Voltage Switching Technique and Conventional Computed Tomography. **WILLIAM D. HWANG, MD.** Journal of Computer Assisted Tomography", J. Comput. Assist. Tomogr. Wolters Kluwer Health, March 2016, vol. 40, 320-325